# EUROPÄISCHE PATENTSCHRIFT

(11) **EP 0 418 562 B1**
(45) Veröffentlichungstag und Bekanntmachung des Hinweises auf die Patenterteilung: **29.03.1995**
(21) Anmeldenummer: 90115789.1
(22) Anmeldetag: 17.08.1990
(51) Int. Cl.: H01G 9/00

(54) **Verfahren zum Herstellen eines Festelektrolytkondensators in Chip-Bauweise mit Sicherungselement**
Process for making a solid electrolytic chip capacitor with protection element
Procédé de fabrication d'un condensateur à électrolyte solide sous forme de chip avec élément de sécurité

(30) Priorität: 19.09.1989 DE 3931246
(43) Veröffentlichungstag der Anmeldung: 27.03.1991
(73) Patentinhaber: SIEMENS AKTIENGESELLSCHAFT, 80333 München (DE)
(72) Erfinder: Schnabel, Werner, Dr.-Ing. Dipl.-Phys., D-7921 Nattheim (DE)

(56) Entgegenhaltungen:
- EP-A- 0 232 868
- EP-A- 0 350 366
- EP-A- 0 392 987
- DE-A- 2 230 629
- DE-A- 3 612 290
- US-A- 4 907 131

## Beschreibung

Die Erfindung betrifft ein Verfahren zum Herstellen eines Festelektrolytkondensators in Chip-Bauweise nach dem Oberbegriff des Patentanspruchs 1.

Der Einsatz von kunststoffumhüllten Festelektrolytkondensatoren in professionellen Geräten ist nicht ganz unproblematisch, da im Falle eines Kurzschlusses bzw. einer Verpolung ein Entzünden und Brennen der Kunststoffumhüllung und die Beschädigung benachbarter Bauelemente möglich ist. Um dies zu verhindern, werden vom Anwender immer häufiger Bauelemente mit integrierter Sicherung verlangt.

Es ist bereits ein Festelektrolytkondensator bekannt, bei dem zwischen Kathodenanschluß und Kathodenkontaktierung eine Schmelzsicherung angeordnet ist (DE 25 31 438 C3). Hierbei handelt es sich aber um bedrahtete und relativ große Bauformen, die im Falle einer Überhitzung über die Lotbrücke eine Unterbrechung erzeugen.

Für insbesondere miniaturisierte Bauelemente in Chip-Bauweise sind derartige Schmelzsicherungen nicht geeignet.

Ein Festelektrolytkondensator in Chip-Bauweise der eingangs genannten Art wurde in der älteren europäischen Patentanmeldung EP 0 350 366 A1, welche unter Artikel 54(3) EPÜ fällt, vorgeschlagen.

Aufgabe der Erfindung ist es, ein Verfahren zur Herstellung eines Festelektrolytkondensators in Chip-Bauweise anzugeben, bei dem die strukturelle Stabilität des Anodenanschlusses bei der Herstellung gewährleistet ist.

Diese Aufgabe wird erfindungsgemäß durch ein Verfahren gelöst, das die in Patentanspruch 1 angeführten Merkmale aufweist.

Zweckmäßige Weiterbildungen sind im Unteranspruch angeführt.

Der Gegenstand der Erfindung wird anhand der folgenden Ausführungsbeispiele erläutert.

In der dazugehörenden Zeichnung zeigen
- FIG 1: eine Draufsicht und
- FIG 2: eine Seitenansicht eines Festelektrolytkondensators mit Sicherungselement.

Ein Sinterkörper 1 aus einem Ventilmetall (vorzugsweise Tantal) ist mit einer dielektrischen wirksamen Oxidschicht versehen. Als Kathode dient ein Festelektrolyt (vorzugsweise halbleitendens Mangandioxid). Der Festelektrolyt ist mit einer kathodischen Kontaktschicht 2 (z. B. einer Silberleitlackschicht) versehen, die über eine Lotschicht 3 mit dem Kathodenanschluß 4 verbunden ist.

Im Sinterkörper 1 ist ein Anodendraht 5 angeordnet, der aus dem gleichen Material wie der Körper 1 besteht. Der Anodendraht 5 ist über eine Schweißstelle 6 mit dem Anodenanschluß 7 verbunden. Der Anodenanschluß 7 weist eine Aussparung 9 auf, die von einem Sicherungselement 8 (z. B. einem Feinsicherungsdraht) überbrückt wird.

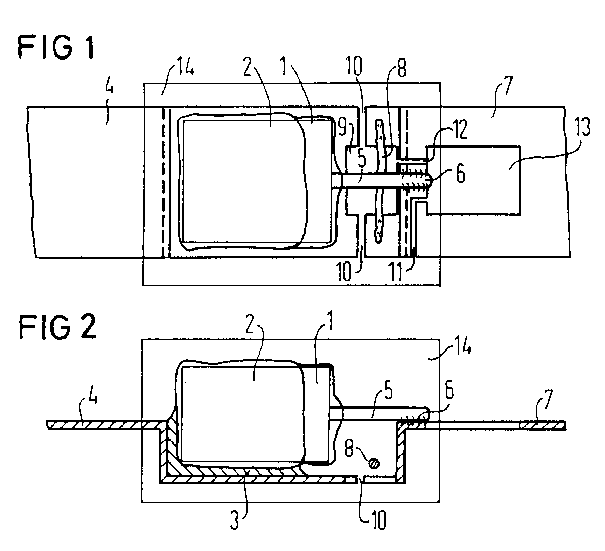

Wie insbesondere der FIG 2 zu entnehmen ist, ist der Sinterkörper 1 vorzugsweise in einen Systemträger eingebaut, bei dem Anoden- 7 und Kathodenanschluß 4 miteinander verbunden sind und erst nach dem erfolgten Einbau, d. h. nach Herstellen der Lötverbindung 3 und der Schweißstelle 6 an der Stelle 10 aufgetrennt werden.

Im Anodenanschluß 7, der eine weitere Aussparung 13 besitzt, werden die Trennsstellen 11 und 12 angebracht, was vorzugsweise wie auch bei der Trennstelle 10 mit Hilfe eines Lasers geschieht. Hierdurch befindet sich das Sicherungselement 8 zwischen der Anodenschweißstelle 6 und der Austrittsstelle des Anodendrahtes 5 aus dem Sinterkörper 1. Es ergibt sich somit eine schleifenartige Stromführung vom Anodenanschluß 7 über das Sicherungselement 8 zur Anodendrahtschweißstelle 6 und von da über den Anodendraht 5 zum Kondensatorelement 1 und dann zum Kathodenanschlußstreifen 4.

Die Schnittführung, insbesondere der Trennstelle 11, ist so ausgeführt, daß nach dem Herstellen der Umhüllung 14 die mechanische Stabilität des Anodenanschlusses 7 gewahrt bleibt.

Unmittelbar nach der Ausführung der Trennstellen 10, 11 und 12 kann in diesem Bereich mit Hilfe eines schnellhärtenden Kunststoffs die strukturelle Stabilität sichergestellt werden.

Die Ausführungsform des Sicherungselements 8 hängt bezüglich des Ansprechverhaltens von den Erfordernissen (Spezifikation) des Einsatzfalles ab.

Neben der in den FIG dargestellten Lötverbindung 3 zwischen Kathodenkontaktschicht und Kathodenanschluß 4 kann auch ein elektrisch leitfähiger Klebstoff Verwendung finden.

Nach Herstellen der Umhüllung 14 werden Anoden- 7 und Kathodenanschluß 4 um jeweils 2 × 90° auf die Auflagefläche des Chip-Bauelementes umgebogen.

## Patentansprüche

1. Verfahren zum Herstellen eines Festelektrolytkondensators in Chip-Bauweise mit einem gesinterten Anodenkörper (1), der eine dielektrisch wirksame Oxidschicht, einen als Kathode dienenden Festelektrolyt und eine kathodische Kontaktschicht (2) besitzt, der einen im Sinterkörper (1) angeordneten Anodendraht (5) aufweist, der in einem Systemträger mit Anoden- (7) und Kathodenanschluß (4) eingebaut ist, bei dem der Anodenanschluß (7) durch ein Sicherungselement (8) überbrückte Trennstellen (11, 12) aufweist und der mit einer Kunststoffumhüllung (14) versehen ist,
**dadurch gekennzeichnet,** daß
der Sinterkörper (1) in einem Systemträger mit nichtgetrenntem Anoden- (7) und Kathodenanschluß (4) eingebaut wird, und daß nach Einbau des Sinterkörpers (1) und des Sicherungselements (8) die Verbindung zwischen Anoden- und Kathodenanschluß aufgetrennt (10) und die Trennstellen (11, 12) im Anodenanschluß (7) angebracht werden.

2. Verfahren zum Herstellen eines Festelektrolytkondensators nach Anspruch 1,
**dadurch gekennzeichnet,** daß
die Trennstellen (11, 12) durch einen schnellhärtenden Kunststoff stabilisiert werden.

## Claims

1. Method of making a solid-electrolyte chip capacitor having a sintered anode body (1) which has a dielectrically acting oxide layer, a solid electrolyte serving as cathode and a cathodic contact layer (2), which has an anode wire (5) arranged in the sintered body (1), which is built into a lead frame which has anode connection (7) and cathode connection (4) and in which the anode connection (7) has separating points (11, 12) bridged by a fuse element (8) and which is provided with a plastic envelope (14), characterized in that the sintered body (1) is built into a lead frame having unseparated anode connection (7) and cathode connection (4), and in that, after mounting the sintered body (1) and the fuse element (8), the connection between anode connection and cathode connection is separated (10) and the separating points (11, 12) are provided in the anode connection (7).

2. Method of making a solid-electrolyte capacitor according to Claim 1, characterized in that the separating points (11, 12) are stabilized by a fast-curing plastic.

## Revendications

1. Procédé pour fabriquer, à la manière d'une puce (chip) , un condensateur à électrolyte solide comportant un corps d'anode fritté (1), qui possède une couche d'oxyde ayant une action diélectrique, un électrolyte solide utilisé comme cathode et une couche de contact cathodique (2), qui possède un fil d'anode (5) disposé dans le corps fritté (1) et qui est montée dans un support du système avec une borne d'anode (7) et une borne de cathode (4), et dans lequel le raccord d'anode (7) comporte des zones de séparation (11,12), qui sont comblées par un élément fusible (8), et qui est pourvu d'une enveloppe en matière plastique (14), caractérisé par le fait que le corps fritté (1) est monté dans un support du système comportant une borne d'anode (7) et une borne de cathode (4), non séparées, et qu'après le montage du corps fritté (1) et de l'élément fusible (8), la liaison entre la borne d'anode et la borne de cathode est sectionnée (10) et les zones de séparation (11,12) sont ménagées dans la borne d'anode (7).

2. Procédé pour fabriquer un condensateur à électrolyte solide suivant la revendication 1, caractérisé en ce que les zones de séparation (11,12) sont stabilisées par une matière plastique à durcissement rapide.
